# EUROPEAN PATENT SPECIFICATION

(11) **EP 3 289 410 B1**
(45) Date of publication and mention of the grant of the patent: **15.04.2020**
(21) Application number: 16719426.5
(22) Date of filing: 29.04.2016
(51) Int. Cl.: G03B 17/00, G03B 17/56

(54) **CAMERA MOUNTING**
HALTERUNG RÜR EINE KAMERA
SUPPORT POUR UN APPAREIL PHOTO

(30) Priority: 29.04.2015 GB 201507321
(43) Date of publication of application: 07.03.2018
(73) Proprietor: TomTom International B.V., 1011 AC Amsterdam (NL)
(72) Inventor: TAYLOR, Christopher James, 1011 AC Amsterdam (NL); RIDDIFORD, Martin, 1011 AC Amsterdam (NL)
(74) Representative: Siem, Max Yoe Shé
(86) International application number: PCT/EP2016/059706
(87) International publication number: WO 2016/174255

(56) References cited:
- CN-U- 203 537 487
- DE-U1- 20 311 038
- US-A- 5 473 368
- US-A1- 2004 184 798
- US-A1- 2009 256 035
- US-A1- 2010 208 130

## Description

### Field of the Invention

This invention relates to the mounting of cameras, including still cameras and particularly video cameras. Illustrative embodiments of the invention relate to mounts for video cameras for use during outdoor activities and action sports e.g. cycling, mountain biking, hiking, climbing, skiing and snowboarding, surfing, sky diving, sub-aqua diving, etc.

### Background of the Invention

It is known to mount still and video cameras so that they can record images or video during action sports, for example wearable video cameras can be mounted to a helmet, bicycle, surf board, etc. to capture action footage. So-called "action cams" can typically be mounted in different orientations, e.g. on a helmet, but the orientation of the camera is generally fixed once it has been mounted in a particular position. This can be problematic when activities do not take place on the level and the camera may be tilted or inverted during use. A horizon adjustment may be required to adjust the orientation of the horizontal image plane in relation to the mounting orientation of the camera body, e.g. during post-processing of video data recorded by the camera. Furthermore a user may wish to be able to adjust an orientation of a camera after it has been mounted.

WO 2009/018391 A1 discloses a manual horizon adjustment control in the form of a rotary ring around the lens. Manual rotation of the ring during use of the camera either rotates the CMOS image sensor, so that post-processing is not required, or encodes the video data with the correct horizon so that post-processing adjustment is automatic. However this requires an additional manual adjusting step every time the mounting orientation is changed. WO 2012/037139 A2 shows examples of a camera mounted in different orientations with the lens manually rotated to provide for horizon adjustment. Examples of conventional mountings for cameras are disclosed in DE 203 11 038 U1, US 2010/208130 A1, US 2004/184798 A1, CN 203 537 487 U and US 5 437 368 A.

### Summary of the Invention

According to a first aspect of the present invention there is provided an adjustable mount for a camera as defined in independent claim 1 and a mount body as defined in independent claim 4.

It will be understood that such a mount is a two-part mount comprising the mount base and the mount body removably connected thereto. This means that a single mount base can be fixed in position on an object such as a helmet, while different mount bodies may be connected to the base at different times. The mount base may, for example, be permanently attached to an object such as a helmet by adhesive. The removable mount body enables different cameras to be quickly interchanged on the same fixed mount base. Furthermore, the double adjustability of the mount body means that, once installed, a user can easily adjust the shooting direction and angle of a camera on the mount. The body being rotatable about a vertical axis passing through the base, e.g. in a horizontal plane parallel to the base, allows the camera to swivel from side to side. A portion of the body being pivotable away from the horizontal plane, e.g. pitching out of a horizontal plane parallel to the base, allows the camera to tilt up and down. In practice this means that a camera on the mount can be adjusted in two ways to have a wide variety of different orientations. This is ideal for an action camera, especially a video camera.

The body may be removably connected to the base in any suitable way. In various embodiments the removable connection may comprise a frictional engagement, preferably one that can be selectively released by a user applying a force to overcome the frictional engagement. For example, a hook and loop fastening, such as Velcro®, may be used. However a potential problem with a frictional engagement is that the body may be loosened from the base during use of the mount, especially if the mount is not generally stationary but subject to forces during wear. The mount may, for example, be worn by a person during outdoor activities and action sports. It is therefore desirable for the removable connection to comprise a positive connection arrangement, e.g. one that must be positively disconnected to enable release of the body from the base. This can avoid accidental decoupling of the body from the base during use.

In a preferred set of embodiments the body is removably connected to the base by an interlocking arrangement, for example a positive interlocking arrangement. Such an arrangement can ensure that the body is not accidentally disconnected from the base during use of the mount. Furthermore, the Applicant has realised that an interlocking arrangement may also be exploited to make the body rotatable relative to the base. In other words, the interlocking arrangement can advantageously provide a dual function. It is therefore preferable that the interlocking arrangement allows for rotation of the body about a vertical axis passing through the base. This may be achieved in various ways, but in a set of embodiments the interlocking arrangement comprises a rotational ratcheting arrangement. This is described further below.

In addition, or alternatively, it is preferable that the mount further comprises means actuable to fix the interlocking arrangement and thereby disable rotation of the body. Again, this provides a dual function in terms of fixing the body in place on the base and simultaneously fixing the body in a given rotational position. Such means may be actuated, e.g. by a user when the body is connected to the base in a desired rotational position. Suitable means may comprise an actuator that applies a force to the interlocking arrangement to reinforce its positive interlock. In addition, or alternatively, suitable means may comprise an actuator that applies a force to prevent any relative movement in the interlocking arrangement.

It is desirable for a user to be able to disconnect the body from the base of the mount. Preferably the interlocking arrangement can be selectively released to enable disconnection of the body from the base. For example, it may be possible to move part of the interlocking arrangement out of positive engagement e.g. by a user pressing or pushing on a part of the interlocking arrangement. This is described further below.

Preferably the body is rotatable about a vertical axis passing centrally through the base. The interlocking arrangement may therefore be positioned centrally on the base. The interlocking arrangement preferably allows for rotation of the body substantially through a range of 360°. The interlocking arrangement may therefore be rotationally symmetric. As is mentioned above, the interlocking arrangement may comprise a rotational ratcheting arrangement. This may take the form of a one-way or two-way ratcheting arrangement.

In a preferred set of embodiments the interlocking arrangement comprises a toothed disc on the base and a corresponding set of teeth on the body (or vice versa). A positive engagement between the toothed disc on one side and the teeth on the other side forms the connection between the body and the base. Furthermore, the teeth are preferably mounted to allow a degree of movement relative to the toothed disc. The teeth may be mounted so as to be moveable radially and/or tangentially in the horizontal plane of the base and its toothed disc. This means that the body can be rotated relative to the base (or vice versa). For example, the teeth may be mounted on a slider. In addition, a resilient, e.g. spring, bias is preferably arranged to return the moveable teeth to a neutral position after each increment of rotational movement.

It is further preferable that the interlocking arrangement comprises a seal between the toothed disc and the set of teeth. Such a seal can help to accommodate some movement of the teeth out of the horizontal plane of the base without losing the positive connection between the body and the base. The seal may comprise an elastomeric and/or resilient and/or compressible surface or material, e.g. a silicone insert. Such a seal can help to hold the mount body firmly in position on the base, even when the body is rotated relative to the base during use.

As is described above, the mount may include means actuable to fix the interlocking arrangement and thereby disable rotation of the body. It will be appreciated that the body may be locked in a desired rotational position by preventing movement of the teeth relative to the toothed disc. Accordingly, an actuator may be arranged to apply a force to the spring-mounted teeth.

A further advantage of the interlocking arrangement comprises a toothed disc on the base and a corresponding set of teeth on the body is that the body can be connected to the base in a compact manner. In a preferred set of embodiments the body comprises an aperture to accommodate the toothed disc when the body is connected to the base in use. The toothed disc of the base may thereby share a horizontal plane with the body, helping to make the mount low in profile. Further preferably the aperture also accommodates the mounting portion when it is lowered to a position in the horizontal plane. Reference to the horizontal plane means in the same plane as the base, or a parallel plane. In other words, the mounting portion may be lowered to a position on top of the base where it is accommodated in the same aperture as the toothed disc. This means that the mount may not extend far out of the horizontal plane while still providing a high degree of adjustability.

This is considered novel and inventive in its own right, and thus according to a further aspect of the present invention there is provided a mount body comprising an aperture arranged to provide a removable connection to a fixed base and a mounting portion for supporting a camera in use, the mounting portion being pivotable from a lowered position where the mounting portion is accommodated by the aperture.

It will be appreciated that the mounting portion may be at least partly, but preferably substantially wholly, accommodated by the aperture in its lowered position. Such a mount body may further comprise any of the features already described above. For example, it is preferable that the aperture forms part of an interlocking arrangement, e.g. the mount body comprising teeth at a periphery of the aperture for positive engagement with a corresponding toothed disc. As above, such an arrangement can advantageously provide the removable connection to a fixed base and also rotation of the mount body relative to the fixed base.

In embodiments according to either aspect of the invention, preferably the mounting portion is pivotable from a lowered position in the horizontal plane of the body. As mentioned above, preferably this is a lowered position where the mounting portion is accommodated by an aperture in the body; this helps to keep the mounting body or mount low in profile. Preferably the mounting portion is pivotable away from the lowered position by up to at least 90°. The mounting portion may pivot relative to the body in any suitable way. Preferably the mounting portion has a hinged connection with the body. This can provide for smooth pivoting through a continuous range of angles.

It has already been discussed above that the mount body can preferably be locked in a desired rotational position. In addition, or alternatively, it is preferable for a user to be able to lock the mounting portion in a pivoted position as desired. It is therefore preferable that the mount or mount body further comprises means actuable to lock the mounting portion in a position. This may be in the lowered position or any position pivoted away from the horizontal plane of the aperture or base. Preferably this is the same as the means actuable to fix the interlocking arrangement and thereby disable rotation of the body relative to the base. In other words, a single locking actuator for both rotation and pitch of a camera supported by the mounting portion.

The present invention also extends to a camera comprising a mounting system that is supported on the mounting portion of an adjustable mount as described above. Typically the camera may be supported on the mounting interface in more than one orientation, e.g. forwards or backwards, which means that a 90° range of pitching is sufficient to cover all angles from the horizon.

It will be appreciated that a camera mounting system may be supported directly or indirectly by the mounting portion of the body, for example via an intermediate mounting interface. In a preferred set of embodiments the mounting portion comprises a mounting interface for a camera mounting system. This can allow a camera mounting system to be supported directly on the mounting portion. In at least some embodiments the mounting interface comprises one or more protruding T-bar features that mate with one or more corresponding apertures in a camera mounting system. In addition, or alternatively, the mounting interface may comprise one or more portions formed of a compressible material.

There will now be described some general features that may be applied to any of the embodiments discussed above. Preferably the mount, i.e. both the mount body and mount base, is made of a hard plastics material. As already mentioned, it is preferable that the mount has a low profile comprising a height that is much less than a width and a depth in the horizontal plane. The height of the mount may be measured as its dimension orthogonal to the horizontal plane of the base. The base is preferably substantially planar. However the base may comprise a flat or curved lower surface. This can assist in fixing the base to a range of different objects, e.g. a helmet or handlebars of a bicycle. The mount may consist of one or more of: an adhesive mount, a strap mount, a chest mount, a tripod mount, a tripod adapter, a suction cup mount, a helmet mount, a board mount, a magnetic mount, a ball joint mount, a tongue and groove mount, a strap mount, a goggle mount, an arm mount, an articulated mount, a telescoping arm, or an adaptor for retrofitting to any other kind of mount. It will be appreciated that the adjustability of the two-part mount, and the ability to interchange the mount body with different mount bases, make for a universal mount.

### Brief Description of the Drawings

Various aspects of the teachings of the present invention, and arrangements embodying those teachings, will hereafter be described by way of illustrative example with reference to the accompanying drawings, in which:
Figures 1A to 1C provide a perspective view of a camera mount, comprising a mount body connected to a mount base, according to an embodiment of the present invention;
Figures 2A to 2C provide a perspective view of the mount body; and
Figure 3 is an exploded view of the mount body.

### Detailed Description of the Preferred Embodiments

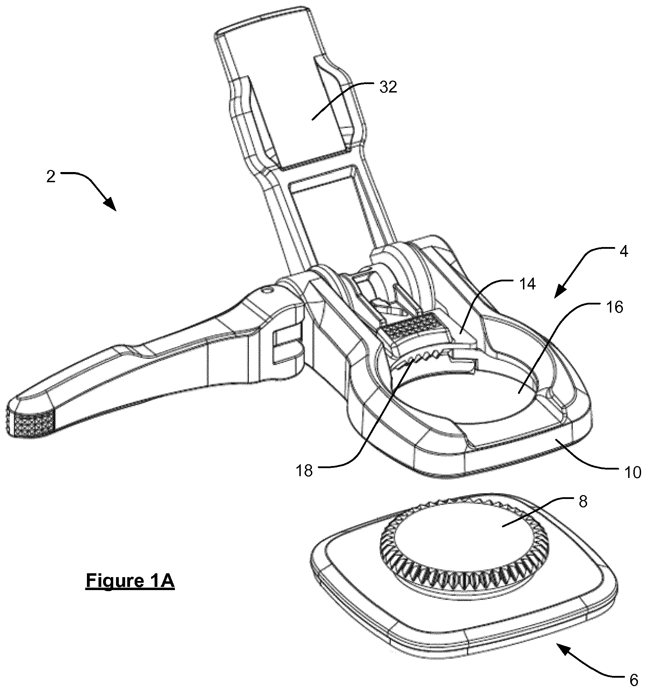

There is generally seen in Figures 1A to 1C a camera mount 2 comprising a mount body 4 removably connected to a mount base 6. It will be appreciated that one or more such mount bodies 4 may be interchanged for a given base 6. The mount base 6 may, for example, be fixed to an object such as a helmet by adhesive. Both the mount body 4 and mount base 6 are made of a hard plastics material.

In Figure 1A it can be seen that the mount base 6 takes the form of a generally flat plate with a toothed disc 8 upstanding on its upper surface. The lower surface of the base 6 may be flat or slightly curved. The mount base 6 defines a horizontal plane for the mount 2, in other words, a plane from which the orientation of the camera on the mount 2 may be adjusted. The toothed disc 8 provides a dual function. Firstly, it forms a removable connection with the mount body 4. Secondly, it enables the mount body 4 to be controllably rotated about a vertical axis passing through the base 6. This is described in more detail below.

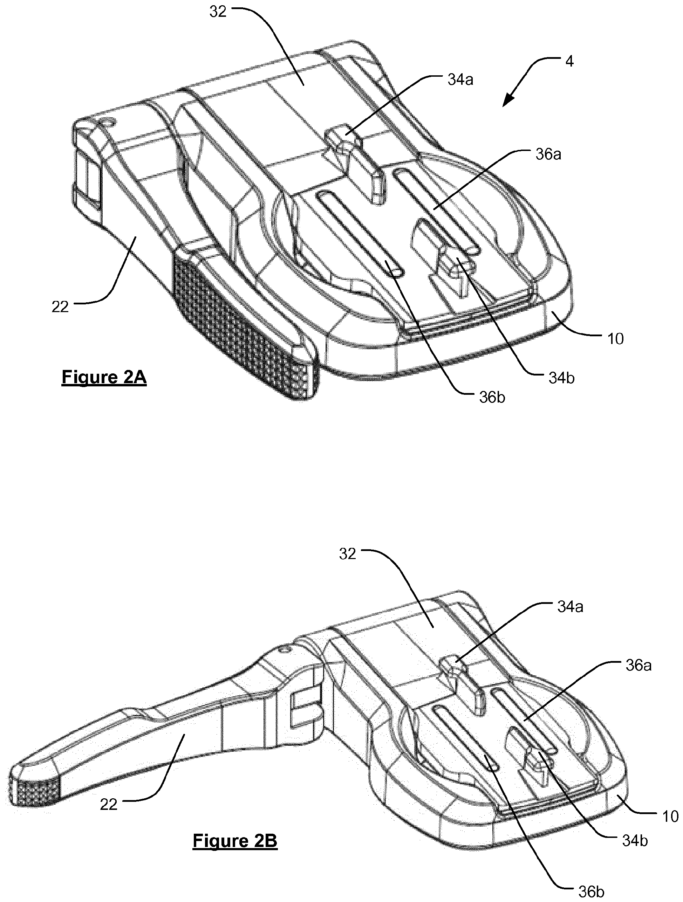

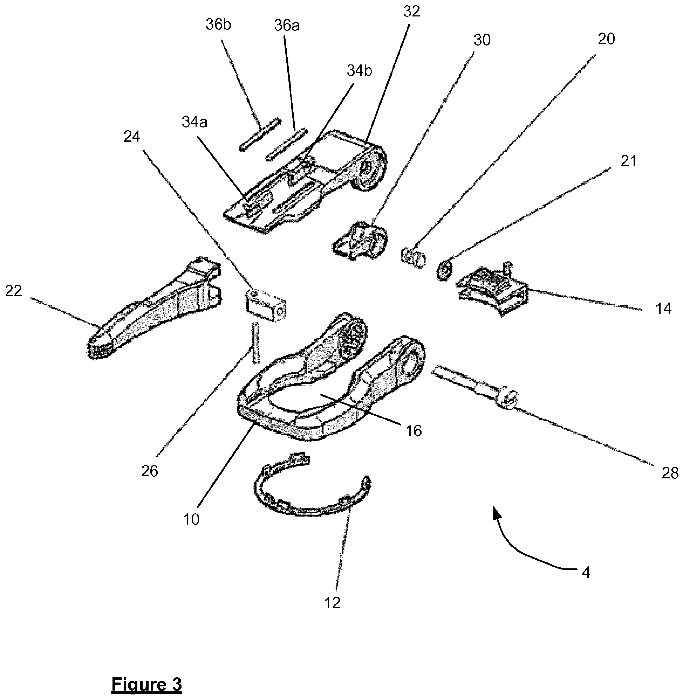

Turning to Figures 2A to 2C and Figure 3, it can be seen that the mount body 4 comprises a U-shaped member 10 shaped to fit over the toothed disc 8 of the base 6. A rubber e.g. silicone insert 12, seen in Figure 3, is seated inside the U-shaped member 10. When the mount body 4 is connected onto the base 6, the rubber insert 12 deforms to form a seal with the toothed disc 8. A slider 14 is mounted in the body 4 to close the U-shaped member 10 and form a circular aperture 16 that surrounds the toothed disc 8. The annular wall of the circular aperture 16 hooks under the disc 8. The slider 14 can be pushed back radially to enable the body 4 to hook over the disc 8.

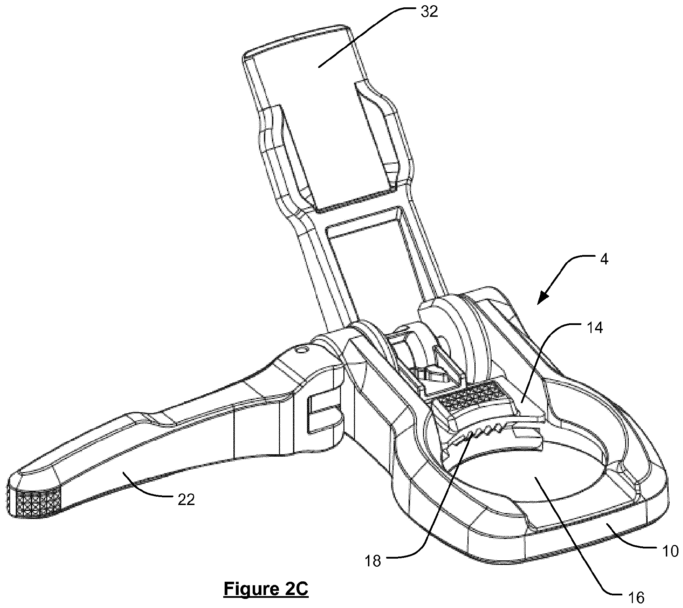

It can be seen e.g. in Figure 1A or Figure 2C that the slider 14 carries teeth 18 to positively engage with the toothed disc 8 when the disc 8 is seated in the aperture 16. The slider 14 is mounted loosely within the U-shaped member 10 so that it can move radially and/or tangentially relative to the aperture 16, but against a spring 20 (see in Figure 3) that limits its range of motion. This forms a two-way ratchet mechanism in which the mount body 4 can be rotated relative to the fixed base 6, the slider 14 shuttling back and forth as each tooth on the disc 8 passes the teeth 18. After each increment of rotation, the resilient bias of the spring 20 returns the slider 14 to a central position where the teeth 18 are positively engaged with the toothed ring 8 and the rotational position of the mount body 4 is stable. The slider 14 has enough freedom of movement that the teeth 18 can glide over those of the toothed disc 8 during rotation. A user can rotate the mount body 4 around the toothed disc 8 in either direction through a full 360 degrees. Of course, the ratchet mechanism could have a more limited angular range, e.g. if the disc 8 were not toothed around its full circumference, or if the disc 8 were replaced by a semi-circle or other shape.

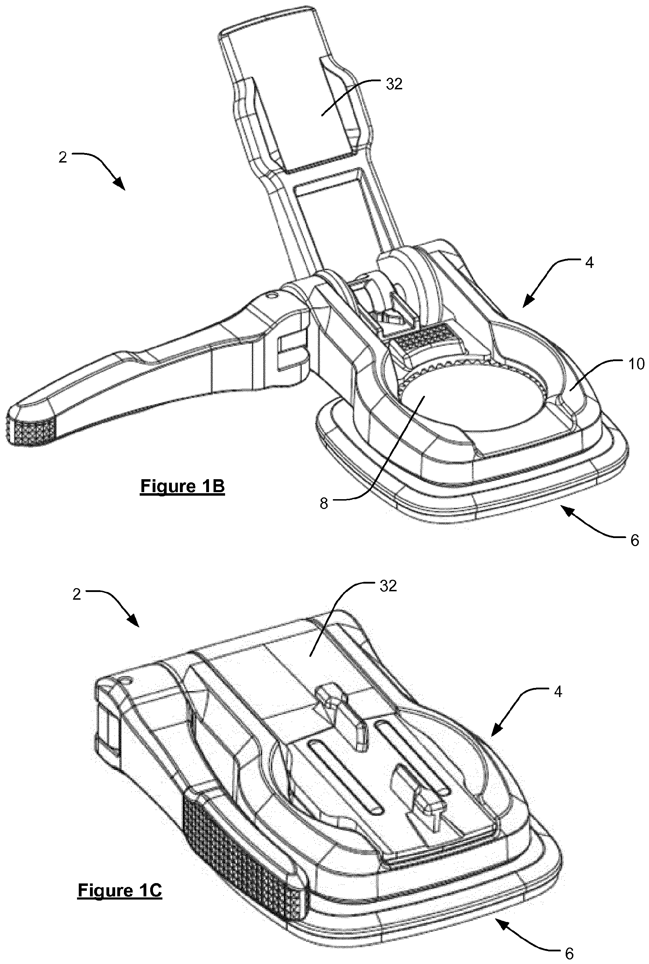

The mount body 4 further comprises a cam lever 22 mounted on one side. As seen in Figure 3, the cam lever 22 is mounted on the same axis as the slider 14 by a cam nut 24, pin 26 and stepped bolt 28. The stepped bolt 28 also carries the slider 14, spring 20 and a washer 21. It can be seen from Fig 3 that a slider lock 30 is mounted between the spring 20 and the cam lever 22. When the cam lever 22 is pivoted towards the mount body 4, as seen in Figures 1C and 2A, it moves an over-centre cam so that the slider lock 30 is pushed to compress the spring 20 and prevent any movement of the slider 14. This locks the ratcheting mechanism so that the mount body 4 is held in its rotational position. In other words, rotation is locked through the stepped bolt 28 locking the slider 14. Even if a camera on the mount 2 were to be knocked, the mount body 4 would not be able to move. This also acts to lock the toothed connection between the mount body 4 and the base 6, so that the mount 2 is securely held together during use.

In order to provide the mount 2 with a pitching adjustment, in addition to the rotational adjustment described above, the mount body 4 further comprises a mounting interface plate 32 that is hinged on the tangential bolt 28. The mounting interface plate 32 includes two protruding T-bar features 34a, 34b on its upper surface. As is described in more detail in the Applicant's co-pending application(s), these T-bar features 34a, 34b may allow for connection to a camera mounting system. In addition, the mounting interface plate 32 includes two strips 36a, 36b of compressible material on its upper surface. These strips 36a, 36b help to ensure that a camera is mounted without vibration.

As is seen in Figures 1 and 2, the mounting interface plate 32 can be pitched forwards and backwards between a raised position (Figure 1B; Figure 2C) and a lowered position (Figure 1C; Figure 2B). With the cam lever 22 open, the mounting interface plate 32 is freely hinged to allow a user to adjust its angular position out of the horizontal plane of the mount body 4 on the base 6. Once the mounting interface plate 32 has a desired pitch, the cam lever 22 can be pivoted towards the mount body, as seen in Figure 1C or Figure 2A, to squeeze the hinge on the bolt 28 and lock the mounting interface plate 32 in position. This is assisted by an over-centre cam. Figures 2A to 2C show how the cam lever 22 may be released when it is desired to loosen the hinge and change the pitch of the mounting interface plate 32. The mounting interface plate 32 can be tilted from the horizontal plane through any angle up to 90°, and even a little beyond 90° as allowed by the hinge arrangement in this embodiment. This facilitates access to the slider 14 when the mount 2 is open (see Figure 2C).

In order to disconnect the mount body 4 from the base 6, as seen in Figure 1A, the cam lever 22 must be pivoted open to unlock the slider 14. A user can then press the slider 14 to disengage the teeth 18 from the toothed disc 8. This allows the mount body 4 to be lifted away from the base 6. The mount body 4 could be interchanged for another while the base 6 stays fixed in the same position on an object such as a helmet.

It will be appreciated from Figures 1 and 2 that the mount 2 has a very low profile while also providing a high degree of adjustability in the position of a camera connected to the mounting interface plate 32. This can be attributed to the way in which the toothed disc 8 is accommodated inside the aperture 16 formed in the mount body 4, so that both the base 6 and body 4 of the mount 2 occupy substantially the same horizontal plane. The toothed disc 8 not only provides a removable connection between the mount body 4 and base 6, but also provides the ratcheting mechanism that enables a user to adjust the rotational orientation of the mounting interface plate 32. The mounting interface plate 32 can then be pitched up out of the horizontal plane of the mount 2 as desired. When the mounting interface plate 32 is lowered into a position in the same horizontal plane as the mount 2 (Figure 1C; Figure 2A), it is also accommodated inside the aperture 16 formed in the mount body 4. This makes the mount 2 very compact and ideally suited for use with a compact action camera that is to be mounted to an object such as a helmet during physical activity.

## Claims

1. An adjustable mount (2) for a camera, the adjustable mount comprising a fixed base (6) for mounting to an object in a fixed position, a mount body (4) that is removably connected to the fixed base (6), the fixed base (6) defining a horizontal plane for the adjustable mount (2), and a slider (14) mounted in the mount body (4), whose teeth (18) positively engage and slide on a toothed disc (8) on the fixed base (6), wherein the mount body (4) comprises a cam lever (22), a mounting portion (32) and a slider lock (30) mounted on the same axis of the slider (14), wherein, when the mount body (4) is connected to the fixed base (6) in use, the mount body (4) is rotatable about a vertical axis passing through the fixed base (6) and the mounting portion (32) of the mount body (4) is pivotable away from the horizontal plane so as to enable adjustment of an orientation of a camera supported on the mounting portion, and wherein the cam lever (22) is arranged such that the slider lock (30) is pushed, when pivoted toward the mount body (4), to prevent movement of the slider (14) so as to maintain the mount body (4) in its rotational position on the fixed base (6) and lock the mounting portion (32) in its position.

2. The adjustable mount of claim 1, wherein the mount body comprises an aperture (16) to accommodate the toothed disc (8) when the body (4) is connected to the base (6) in use.

3. The adjustable mount of claim 2, wherein the aperture also accommodates the mounting portion (32) when lowered to a position in the horizontal plane.

4. A mount body (4) arranged to provide a removable connection to a fixed base (6) and a mounting portion (32) for supporting a camera in use, wherein a slider (14) is mounted in the mount body (4), whose teeth (18) positively engage and slide on a toothed disc (8) on the fixed base (6), wherein the mount body (4) comprises a cam lever (22), a mounting portion (32) and a slider lock (30) mounted on the same axis of the slider (14), wherein, when the mount body (4) is connected to the fixed base in use, the mount body (4) is rotatable about a vertical axis passing through the fixed base (6) and the mounting portion (32) of the mount body (4) is pivotable away from a horizontal plane defined by the fixed base (6) so as to enable adjustment of an orientation of a camera supported on the mounting portion (32), wherein the cam lever (22) is arranged such that the slider lock (30) is pushed, when pivoted toward the mount body (4), to prevent movement of the slider (14) so as to maintain the mount body (4) in its rotational position on the fixed base (6) and lock the mounting portion (32) in its position.

5. The adjustable mount or mount body of any preceding claim, wherein the mounting portion (32) is pivotable from a lowered position in the horizontal plane of the mount body (4); and optionally wherein the mounting portion (32) is pivotable away from the lowered position by up to at least 90°.

6. The adjustable mount or mount body of any preceding claim, wherein the mounting portion (32) has a hinged connection with the mount body (4).

7. The adjustable mount or mount body of any preceding claim, wherein the mounting portion (32) comprises a mounting interface for a camera mounting system; and
optionally wherein the mounting interface comprises one or more of:
protruding T-bar features (34a, 34b) that mate with one or more corresponding apertures in a camera mounting system, and/or
one or more portions formed of a compressible material.

8. The adjustable mount of any preceding claims 1-3, 5-7, wherein the mount has a low profile comprising a height that is much less than a width and a depth in the horizontal plane.

9. The adjustable mount of any preceding claims 1-3, 5-8 wherein the base comprises a flat or curved lower surface.

10. The adjustable mount of any preceding claims 1-3, 5-9, consisting of one or more of: an adhesive mount, a strap mount, a chest mount, a tripod mount, a tripod adapter, a suction cup mount, a helmet mount, a board mount, a magnetic mount, a ball joint mount, a tongue and groove mount, a strap mount, a goggle mount, an arm mount, an articulated mount, a telescoping arm, or an adaptor for retrofitting to any other kind of mount.

11. The adjustable mount of any preceding claims 1-3, 5-10 further comprising a camera with a mounting system that is supported on the mounting portion of the adjustable mount.

## Patentansprüche

1. Verstellbare Halterung (2) für eine Kamera, wobei die verstellbare Halterung Folgendes umfasst: eine feste Basis (6) zum Montieren an einem Objekt in einer festen Position, einen Halterungskörper (4), der entfernbar mit der festen Basis (6) verbunden ist, wobei die feste Basis (6) eine horizontale Ebene für die verstellbare Halterung (2) definiert, und einen im Halterungskörper (4) montierten Schieber (14), dessen Zähne (18) formschlüssig in eine Zahnscheibe (8) an der festen Basis (6) eingreifen und darauf gleiten, wobei der Halterungskörper (4) einen Nockenhebel (22), einen Montageteil (32) und eine auf derselben Achse des Schiebers (14) montierte Schieberverriegelung (30) umfasst, wobei der Halterungskörper (4), wenn er beim Gebrauch mit der festen Basis (6) verbunden ist, um eine vertikale Achse drehbar ist, die durch die feste Basis (6) passiert, und der Montageteil (32) des Halterungskörpers (4) von der horizontalen Ebene weg schwenkbar ist, um eine Verstellung einer Orientierung einer auf dem Montageteil gelagerten Kamera zu ermöglichen, und wobei der Nockenhebel (22) so ausgelegt ist, dass die Schieberverriegelung (30) bei einer Schwenkung in Richtung des Halterungskörpers (4) geschoben wird, um eine Bewegung des Schiebers (14) zu verhindern, um den Halterungskörper (4) in seiner Drehposition auf der festen Basis (6) zu halten und den Montageteil (32) in seiner Position zu verriegeln.

2. Verstellbare Halterung nach Anspruch 1, wobei der Halterungskörper eine Öffnung (16) zum Aufnehmen der Zahnscheibe (8) umfasst, wenn der Körper (4) beim Gebrauch mit der Basis (6) verbunden ist.

3. Verstellbare Halterung nach Anspruch 2, wobei die Öffnung auch den Montageteil (32) aufnimmt, wenn er in eine Position in der horizontalen Ebene abgesenkt wird.

4. Halterungskörper (4), ausgelegt zum Bereitstellen einer entfernbaren Verbindung mit einer festen Basis (6) und einen Montageteil (32) zum Lagern einer Kamera beim Gebrauch, wobei ein Schieber (14) im Halterungskörper (4) montiert ist, dessen Zähne (18) formschlüssig an einer Zahnscheibe (8) an der festen Basis (6) eingreifen und darauf gleiten, wobei der Halterungskörper (4) einen Nockenhebel (22), einen Montageteil (32) und eine auf derselben Achse des Schiebers (14) montierte Schieberverriegelung (30) umfasst, wobei der Halterungskörper (4), wenn er beim Gebrauch mit der festen Basis verbunden ist, um eine vertikale Achse drehbar ist, die durch die feste Basis (6) passiert, und der Montageteil (32) des Halterungskörpers (4) von einer durch die feste Basis (6) definierte horizontale Ebene weg schwenkbar ist, um eine Verstellung einer Orientierung einer auf dem Montageteil (32) gelagerten Kamera zu ermöglichen, wobei der Nockenhebel (22) so ausgelegt ist, dass die Schieberverriegelung (30) beim Schwenken in Richtung des Halterungskörpers (4) geschoben wird, um eine Bewegung des Schiebers (14) zu verhindern, um den Halterungskörper (4) in seiner Drehposition auf der festen Basis (6) zu halten und den Montageteil (32) in seiner Position zu verriegeln.

5. Verstellbare(r) Halterung oder Halterungskörper nach einem vorherigen Anspruch, wobei der Montageteil (32) von einer abgesenkten Position in der horizontalen Ebene des Halterungskörpers (4) schwenkbar ist; und wobei optional der Montageteil (32) von der abgesenkten Position um bis zu wenigstens 90° weg geschwenkt werden kann.

6. Verstellbare(r) Halterung oder Halterungskörper nach einem vorherigen Anspruch, wobei der Montageteil (32) eine Gelenkverbindung mit dem Halterungskörper (4) hat.

7. Verstellbare(r) Halterung oder Halterungskörper nach einem vorherigen Anspruch, wobei der Montageteil (32) eine Montageschnittstelle für ein Kameramontagesystem umfasst; und wobei optional die Montageschnittstelle eines oder mehrere der Folgenden umfasst:
vorstehende T-Stab-Merkmale (34a, 34b), die mit einer oder mehreren entsprechenden Öffnungen in einem Kameramontagesystem zusammengesteckt werden, und/oder
einen oder mehrere aus einem komprimierbaren Material gebildete Teile.

8. Verstellbare Halterung nach einem der vorherigen Ansprüche 1-3, 5-7, wobei die Halterung ein tiefes Profil mit einer Höhe hat, die weitaus geringer ist als eine Breite und eine Tiefe in der horizontalen Ebene.

9. Verstellbare Halterung nach einem der vorherigen Ansprüche 1-3, 5-8, wobei die Basis eine flache oder gekrümmte Unterseite hat.

10. Verstellbare Halterung nach einem der vorherigen Ansprüche 1-3, 5-9, bestehend aus einem oder mehreren der Folgenden: einer Klebstoffhalterung, einer Riemenhalterung, einer Brusthalterung, einer Stativhalterung, einem Stativadapter, einer Saugbecherhalterung, einer Helmhalterung, einer Plattenhalterung, einer Magnethalterung, einer Kugelgelenkhalterung, einer Nut- und Feder-Halterung, einer Riemenhalterung, einer Brillenhalterung, einer Armhalterung, einer gelenkigen Halterung, einem Teleskoparm oder einem Adapter zum Umrüsten auf eine beliebige andere Halterungsart.

11. Verstellbare Halterung nach einem der vorherigen Ansprüche 1-3, 5-10, die ferner eine Kamera mit einem Montagesystem umfasst, das auf dem Montageteil der verstellbaren Halterung gelagert ist.

## Revendications

1. Support ajustable (2) pour une caméra, le support ajustable comprenant une base fixe (6) pour servir de support à un objet dans une position fixe, un corps de support (4) qui est raccordé de manière amovible à la base fixe (6), la base fixe (6) définissant un plan horizontal pour le support ajustable (2), et une coulisse (14) montée dans le corps de support (4), dont les dents (18) sont en prise avec et coulissent de manière positive sur un disque denté (8) sur la base fixe (6), le corps de support (4) comprenant un levier à came (22), une portion de montage (32) et un verrou de coulisse (30) monté sur le même axe de la coulisse (14), dans lequel, lorsque le corps de support (4) est raccordé à la base fixe (6) en utilisation, le corps de support (4) est apte à tourner autour d'un axe vertical passant à travers la base fixe (6) et la portion de montage (32) du corps de support (4) est pivotable pour l'éloigner du plan horizontal de sorte à permettre un ajustement d'une orientation d'une caméra soutenue sur la portion de montage, et dans lequel le levier à came (22) est agencé de telle sorte que le verrou de coulisse (30) soit poussé, lorsqu'il est pivoté vers le corps de support (4), pour empêcher tout mouvement de la coulisse (14) de sorte à maintenir le corps de support (4) dans sa position rotationnelle sur la base fixe (6) et à verrouiller la portion de montage (32) dans sa position.

2. Support ajustable de la revendication 1, dans lequel le corps de support comprend une ouverture (16) pour recevoir le disque denté (8) lorsque le corps (4) est raccordé à la base (6) en utilisation.

3. Support ajustable de la revendication 2, dans lequel l'ouverture reçoit également la portion de montage (32) lorsqu'elle est abaissée jusqu'à une position dans le plan horizontal.

4. Corps de support (4) agencé pour fournir un raccordement amovible à une base fixe (6) et une portion de montage (32) pour soutenir une caméra en utilisation, dans lequel une coulisse (14) est montée dans le corps de support (4), dont les dents (18) sont en prise avec et coulissent de manière positive sur un disque denté (8) sur la base fixe (6), le corps de support (4) comprenant un levier à came (22), une portion de montage (32) et un verrou de coulisse (30) monté sur le même axe de la coulisse (14), dans lequel, lorsque le corps de support (4) est raccordé à la base fixe en utilisation, le corps de support (4) est apte à tourner autour d'un axe vertical passant à travers la base fixe (6) et la portion de montage (32) du corps de support (4) est pivotable pour l'éloigner d'un plan horizontal défini par la base fixe (6) de sorte à permettre un ajustement d'une orientation d'une caméra soutenue sur la portion de montage (32), et dans lequel le levier à came (22) est agencé de telle sorte que le verrou de coulisse (30) soit poussé, lorsqu'il est pivoté vers le corps de support (4), pour empêcher tout mouvement de la coulisse (14) de sorte à maintenir le corps de support (4) dans sa position rotationnelle sur la base fixe (6) et à verrouiller la portion de montage (32) dans sa position.

5. Support ajustable ou corps de support de n'importe quelle revendication précédente, dans lequel la portion de montage (32) est pivotable depuis une position abaissée dans le plan horizontal du corps de support (4) ; et
facultativement dans lequel la portion de montage (32) est pivotable pour l'éloigner de la position abaissée jusqu'à au moins 90°.

6. Support ajustable ou corps de support de n'importe quelle revendication précédente, dans lequel la portion de montage (32) a un raccordement à charnière avec le corps de support (4).

7. Support ajustable ou corps de support de n'importe quelle revendication précédente, dans lequel la portion de montage (32) comprend une interface de montage pour un système de montage de caméra ; et
facultativement l'interface de montage comprenant un ou plusieurs postes parmi :
des accessoires en saillie à barre en T (34a, 34b) qui s'accouplent avec une ou plusieurs ouvertures correspondantes dans un système de montage de caméra, et/ou
une ou plusieurs portions formées en un matériau compressible.

8. Support ajustable de n'importe quelles revendications précédentes 1 à 3, 5 à 7, le support ayant un profil bas comprenant une hauteur qui est bien moindre qu'une largeur et une profondeur dans le plan horizontal.

9. Support ajustable de n'importe quelles revendications précédentes 1 à 3, 5 à 8, dans lequel la base comprend une surface inférieure plane ou incurvée.

10. Support ajustable de n'importe quelles revendications précédentes 1 à 3, 5 à 9, consistant en un ou plusieurs postes parmi : un support adhésif, un support sur sangle, un support sur poitrine, un support tripode, un adaptateur tripode, un support à ventouse, un support sur casque, un support sur planche, un support magnétique, un support à rotule, un support à rainure et languette, un support sur sangle, un support sur lunettes, un support sur bras, un support articulé, un bras télescopique, ou un adaptateur pour un montage en rattrapage sur n'importe quel autre genre de support.

11. Support ajustable de n'importe quelles revendications précédentes 1 à 3, 5 à 10, comprenant en outre une caméra avec un système de montage qui est soutenu sur la portion de montage du support ajustable.
